# EUROPEAN PATENT SPECIFICATION

(11) **EP 3 383 701 B1**
(45) Date of publication and mention of the grant of the patent: **26.02.2020**
(21) Application number: 16828803.3
(22) Date of filing: 29.11.2016
(51) Int. Cl.: B60Q 1/20

(54) **A FRONT BUMPER FOG LAMP ADJUSTMENT COVER ASSEMBLY**
ANPASSUNGSABDECKUNGSANORDNUNG FÜR FRONTSTOSSFÄNGERNEBELSCHEINWERFER
ENSEMBLE DE CAPOT DE RÉGLAGE DE PHARE ANTIBROUILLARD DE PARE-CHOCS AVANT

(30) Priority: 03.12.2015 TR 201515369
(43) Date of publication of application: 10.10.2018
(73) Proprietor: Tofas Turk Otomobil Fabrikasi Anonim Sirketi, Bursa (TR)
(72) Inventor: DEMIRCI, Erdin, Bursa (TR); CIL, Caner, 16369 Osmangazi/Bursa (TR); ARSLAN, Ismail, 16369 Bursa (TR); VARGELCI, Sinan, Osmangazi/Bursa (TR)
(74) Representative: Dericioglu, E. Korhan
(86) International application number: PCT/TR2016/050468
(87) International publication number: WO 2017/095350

(56) References cited:
- JP-A- H0 867 221
- JP-A- 2007 331 744
- KR-A- 20070 052 482
- US-A1- 2009 168 443

## Description

### Field of the Invention

The present invention relates to a cover assembly which is provided on the buffer on which the fog lamp is mounted in motor vehicles, and enables easy access for the fog lamp adjustment.

### Background of the Invention

In vehicles, there are fog lamps which enable the driver to better see road surface, lane lines and signs in foggy and rainy weather conditions when the sight is decreased for the driver. The fog lamps are generally mounted on the vehicle front bumpers such that they will lighten the road from the front part of the vehicle. Legally, the height of the fog lamps present on the front bumper should be adjusted without demounting the bumper. This adjustment is performed via an adjustment hole made on the fog lamp cover on the front part of the bumper or via a screwdriver inserted through the hole below the bumper.

Different fog lamps are used in bumper bodies for different versions of vehicles. For the fog lamp adjustment used in the current technique, total 4 holes should be made under the bumper, being minimum 2 on the left and 2 on the right. The holes are made in the services in a size such that torque gun will enter, and ø25 mm holes should be made below the bumper. However, since different fog lamps are used on the same bumper type, the adjustment hole sizes differ too; and the four holes to be made cause the water, dust and dirt to enter into the bumper area and the vehicle dynamic to deteriorate. Furthermore, access to the holes made for fog lamp adjustment is quite difficult, and the holes made on the front bumper surface can be seen from the front part of the vehicle and it negative affects the visual quality perception of the vehicle.

Chinese Utility Model no CN204623291(U), an application known in the state of the art, discloses a cover system formed on the space provided on the bumper for the vehicle fog lamp decoration and mounting. The inventive cover is on the fog lamp mounting area. The formed cover can be attached on the bumper with a click-fit tab. The mounting and demounting processes of the fog lamp can easily be performed by the cover being open. However, the invention is used for demounting and mounting of the fog lamp, it is present on the front part of the bumper and it cannot make fog lamp adjustment.

KR20070052482A, an application known in the state of the art, discloses a wheel guard mounting structure for serving a fog lamp of a vehicle is provided to easily mount a cover onto a wheel guard, without using a bolt or retainer, by adjusting the fog lamp through the wheel guard. A cover is detachably installed to a wheel guard to open or close an adjusting hole. An upper portion of the cover is engaged to the wheel guard by using a knob penetrating a slot hole, and a lower portion of the cover is engaged to the wheel guard by a pivot-type insertion member. Two pairs of locking bosses are formed on both sides of the slot hole, in which the bosses are spaced apart from each other. Two fastening holes are formed on a lower portion of the wheel guard.

### The Problems Solved with the Invention

The objective of the present invention is to provide a front bumper fog lamp cover assembly which enables to create an accessible area on the bumper for making fog lamp adjustment.

Another objective of the present invention is to provide a front bumper fog lamp cover assembly wherein the bad appearance created by the fog lamp adjustment hole is avoided and which appears as a flat area from the outside.

A further objective of the present invention is to provide a front bumper fog lamp cover assembly which provides easy access by the fog lamp adjustment cover being collapsible.

### Detailed Description of the Invention

A front bumper fog lamp adjustment cover assembly developed to fulfill the objective of the present invention is illustrated in the accompanying figures, in which:

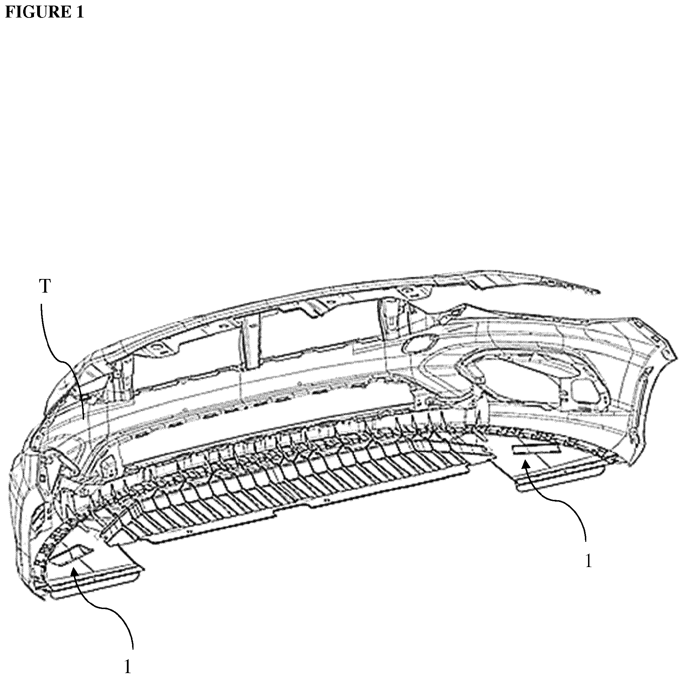

Figure 1 is the perspective view of the inventive front bumper fog lamp adjustment cover assembly and the bumper.

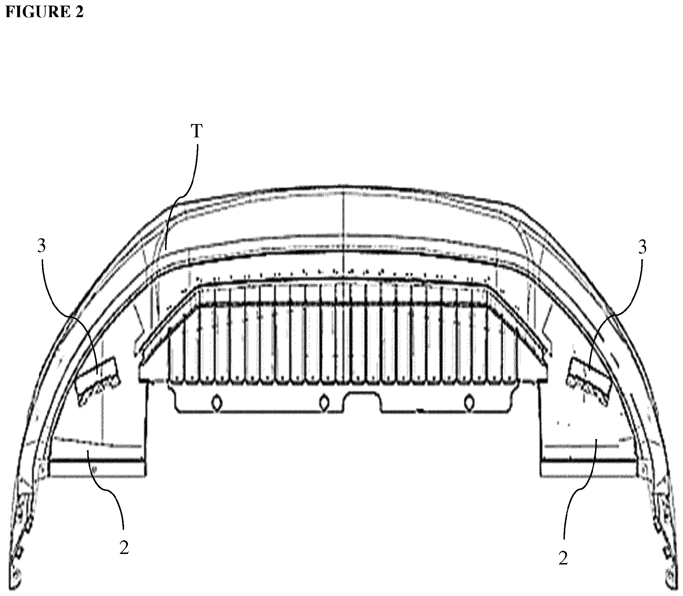

Figure 2 is the view of the inventive front bumper fog lamp adjustment cover assembly and the bumper from below.

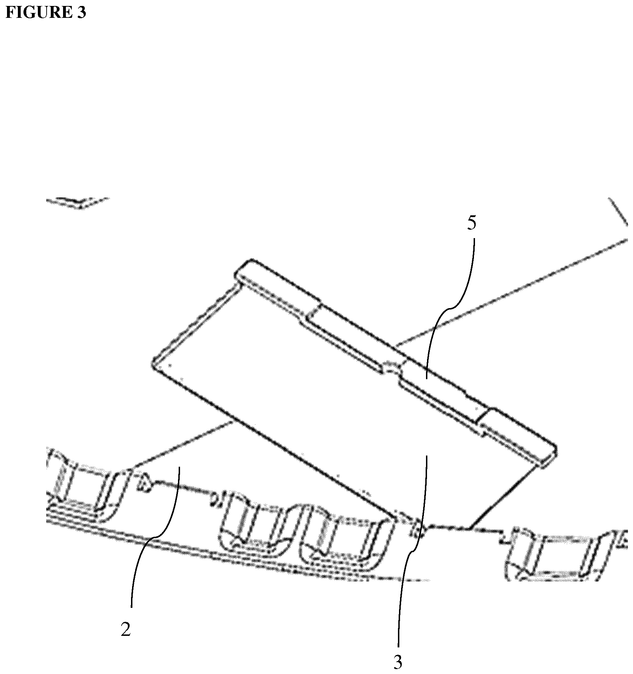

Figure 3 is the top view of the adjustment gap present in the inventive front bumper fog lamp adjustment cover assembly.

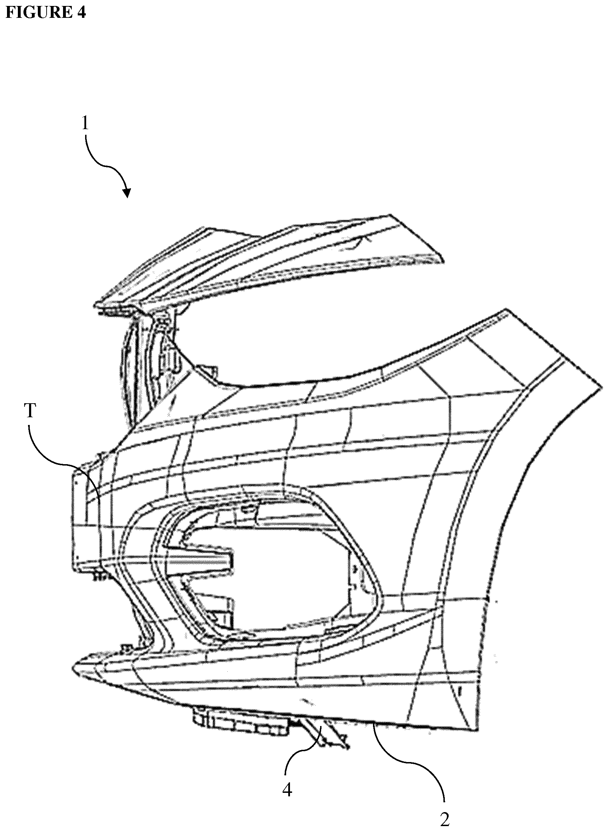

Figure 4 is the lateral view of the cover present in the inventive front bumper fog lamp adjustment cover assembly and the bumper.

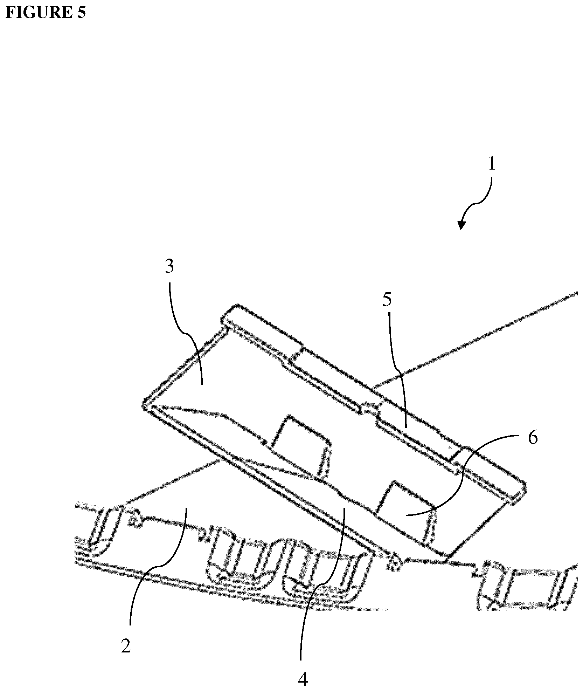

Figure 5 is the front view of the inventive front bumper fog lamp adjustment cover assembly.

The components given in the figures are individually numbered where the numbers refer to the following:
**1.** Fog lamp adjustment access assembly
**2.** Bumper lower plate
**3.** Fog lamp adjustment hole
**4.** Cover
**5.** Side slot
**6.** Tab
**T.** Bumper

The fog lamp adjustment access assembly (1), which provides easy access to the fog lamp in order to perform fog lamp adjustment from the motor vehicle bumper (T), essentially comprises
- at least one bumper lower plate (2) which extends vehicle ground of the bumper (T) that is for decreasing the impact of the crash on front parts of the motor vehicles,
- at least one fog lamp adjustment hole (3) which is provided on the bumper lower plate (2) and which forms a space towards the fog lamps,
- at least one cover (4) which has the size to completely cover the fog lamp adjustment hole (3), which is fixed around the fog lamp adjustment hole (3) from one side, and which makes opening and closing movement on the fog lamp adjustment hole (3) by making a rotary movement centered around the edge at which it is fixed,
- at least one side slot (5) which is in form of a recess towards the bumper lower plate (2) from the fog lamp adjustment hole (3),
- at least one tab (6) which is in form of a protrusion on the edge of the cover (4) corresponding above the side slot (5), and which enables the cover (4) to remain in closed position by engaging into the side slot (5).

The inventive fog lamp adjustment access assembly (1) is comprised of bumper lower plate (2) extending towards the vehicle ground part of the vehicle bumpers (T), a fog lamp adjustment hole (3) forming a space on the bumper lower plate (2), a cover (4) covering the fog lamp adjustment hole (3) and making opening-closing movement.

In the inventive fog lamp adjustment access assembly (1), the fog lamp adjustment hole (3) provided on the bumper lower plate (2) forming the lower part of the bumper (T) forms a space extending towards the fog lamp adjustment screw from the bumper (T), and the fog lamp adjustment compartment can easily be accessed by means of the said space. There is a cover (4) assembly which can prevent the passage of unwanted materials such as water, dust, etc. that can occur in the bumper (T) space as a result of the fog lamp adjustment hole (3) formed on the bumper (T). The cover (4) forms a collapsible structure on the vehicle bumper (T), and it enables it to remain closed when the fog lamp adjustment hole (3) is not used.

In one embodiment of the invention, when the cover (4) in the fog lamp adjustment access assembly (1) is in closed position, there is a tab (6) enabling the cover (4) to be attached to the bumper lower plate (2). The tab (6) provided in form of a protrusion on one edge of the cover (4) enables the cover (4) to be attached to the bumper lower plate (2) upon closing. The tab (6) contacts the bumper lower plate (2) upon closing movement and performs a flexing movement, and it performs an engagement process to the bumper lower plate (2) upon the cover (4) closing and a locking is formed.

In one embodiment of the invention, there is a handle on the cover (4) in order to apply opening and closing movement. Therefore, a sufficient opening force can be applied by the user on the cover (4) making engagement movement with the tab (6).

In one embodiment of the invention, there is a side slot (5) in form a recess which is provided on the bumper lower plate (2) and into which the tab (6) can engage. The tab (6) is enabled to be better attached on the bumper (T) during the closing of the cover (4) by means of the formed side slot (5).

In one embodiment of the invention, the cover (4) is manufactured as single piece with the bumper (T) after the plastic injection process of the bumper (T). The formed single piece bumper (T) comprises the cover (4) and the tab (6) thereon. After the production, the cover (4) is in form of an extension protruding from the bumper (T). The cover (4) can make opening and closing movement with flexing movement on the part where it is extending.

In one embodiment of the invention, the cover (4) part and the tab (6) provided on the cover (4) have a plastic flexible structure. The tab (6) can easily perform the flexing movement required for locking by means of the formed flexible structure.

In one embodiment of the invention, the cover (4) is connected onto the bumper lower plate (2) with a hinge. It is enabled that the cover (4) can perform opening and closing movements centered on the hinge from which it is connected to the bumper lower plate (2) by means of the formed hinged assembly.

## Claims

1. A fog lamp adjustment access assembly (1), which provides easy access to the fog lamp in order to perform fog lamp adjustment on the motor vehicle bumper (T), and comprising;
- at least one bumper lower plate (2) which extends towards a vehicle ground part of the bumper (T),
- at least one fog lamp adjustment hole (3) which is provided on the bumper lower plate (2),
- at least one cover (4) which has the size to completely cover the fog lamp adjustment hole (3), which is fixed around the fog lamp adjustment hole (3) from one side, **characterized by**,
- at least one hinge which is provided between the cover (4) and the bumper lower plate (2), and enables the cover (4) to perform rotary movement for opening and closing movement,
- at least one tab (6) which is provided on the cover (4) in form of a protrusion and enables the cover (4) to be attached on the bumper lower plate (2) and which consists of plastic flexible material,
- at least one side slot (5) which is in form of a recess towards the bumper lower plate (2) from the fog lamp adjustment hole (3) and enables to increase attachment ability of the cover (4) by the tab (6) engaging therein.

2. A fog lamp adjustment access assembly (1) according to claim 1, **characterized by** at least one handle which is provided on the cover (4), and which enables the user to apply opening and closing force on the cover (4).

3. 4. A fog lamp adjustment access assembly (1) according to claim 1, **characterized by** cover (4) which consists of plastic flexible material.

4. A fog lamp adjustment access assembly (1) according to claim 1, **characterized by** the cover (4) which is manufactured as single piece with the bumper (T) after a plastic injection process, and which is in form of an extension extending from the bumper (T).

5. A fog lamp adjustment access assembly (1) according to claim 3 or 4 **characterized by** the tab (6) which is manufactured as single piece with the bumper (T) after a plastic injection process.

## Patentansprüche

1. Zugangsbaugruppe (1) für die Nebelscheinwerfereinstellung, die einen leichten Zugang zum Nebelscheinwerfer vorsieht, um die Nebelscheinwerfereinstellung am Kraftfahrzeugstoßfänger (T) durchzuführen, und die Folgendes umfasst;
- mindestens eine untere Platte (2) des Stoßfängers, die sich zu einem Fahrzeugbodenteil des Stoßfängers (T) hin erstreckt
- mindestens eine Öffnung (3) zur Nebelscheinwerfereinstellung, die an der unteren Platte (2) der Stoßstange vorgesehen ist,
- mindestens eine Abdeckung (4), die die Größe hat, um die Öffnung (3) zur Nebelscheinwerfereinstellung vollständig abzudecken, die von einer Seite um die Öffnung (3) zur Nebelscheinwerfereinstellung herum befestigt ist, **gekennzeichnet durch**,
- mindestens ein Scharnier, das zwischen dem Abdeckung (4) und der unteren Platte (2) des Stoßfängers vorgesehen ist, und das eine Drehbewegung der Abdeckung (4) für die Öffnungs- und Schließbewegung ermöglicht,
- mindestens eine Lasche (6), die an der Abdeckung (4) in Form eines Vorsprungs vorgesehen ist und die Befestigung der Abdeckung (4) an der unteren Platte (2) des Stoßfängers ermöglicht und die aus flexiblem Kunststoffmaterial besteht,
- mindestens einen seitlichen Schlitz (5), der von der Öffnung (3) zur Nebelscheinwerfereinstellung zur unteren Platte (2) des Stoßfängers hin als Aussparung ausgebildet ist und es ermöglicht, die Befestigungsfähigkeit der Abdeckung (4) durch den Eingriff der Lasche (6) zu erhöhen.

2. Zugangsbaugruppe (1) für die Nebelscheinwerfereinstellung nach Anspruch 1, **gekennzeichnet durch** mindestens einen Griff, der an der Abdeckung (4) vorgesehen ist und der es dem Benutzer ermöglicht, eine Öffnungs- und Schließkraft auf die Abdeckung (4) auszuüben.

3. Zugangsbaugruppe (1) für die Nebelscheinwerfereinstellung nach Anspruch 1, **gekennzeichnet durch** eine Abdeckung (4), die aus flexiblem Kunststoffmaterial besteht.

4. Zugangsbaugruppe (1) für die Nebelscheinwerfereinstellung nach Anspruch 1, **gekennzeichnet durch** die Abdeckung (4), die nach einem Kunststoffspritzverfahren einstückig mit dem Stoßfänger (T) hergestellt ist und die in Form einer sich vom Stoßfänger (T) erstreckenden Verlängerung vorliegt..

5. Zugangsbaugruppe (1) für die Nebelscheinwerfereinstellung nach Anspruch 3 oder 4, **gekennzeichnet durch** die Lasche (6), die nach einem Kunststoffspritzverfahren einstückig mit dem Stoßfänger (T) hergestellt wird.

## Revendications

1. Ensemble d'accès au réglage des feu de brouillard (1), qui permet un accès facile au feu de brouillard afin d'effectuer le réglage du feu de brouillard sur le pare-chocs (T) du véhicule automobile, et comprenant ;
- au moins une plaque inférieure de pare-chocs (2) qui s'étend vers une partie du pare-chocs (T) située au sol du véhicule,
- au moins un trou de réglage (3) de feu de brouillard qui est prévu sur la plaque inférieure du pare-chocs (2),
- au moins un couvercle (4) qui a la taille pour couvrir complètement le trou de réglage (3) du feu de brouillard, qui est fixé autour du trou de réglage (3) du feu de brouillard par un côté, **caractérisé par**,
- au moins une charnière qui est prévue entre le couvercle (4) et la plaque inférieure du pare-chocs (2), et qui permet au couvercle (4) d'effectuer un mouvement de rotation pour le mouvement d'ouverture et de fermeture,
- au moins une languette (6) qui est prévue sur le couvercle (4) sous forme de saillie et qui permet de fixer le couvercle (4) sur la plaque inférieure du pare-chocs (2) et qui est constituée d'une matière plastique flexible,
- au moins une fente latérale (5) qui est en forme d'évidement vers la plaque inférieure du pare-chocs (2) à partir du trou de réglage (3) du feu de brouillard et qui permet d'augmenter la capacité de fixation du couvercle (4) par la languette (6) qui s'y engage.

2. Ensemble d'accès au réglage des feu de brouillard (1) selon la revendication 1, **caractérisé par** au moins une poignée qui est prévue sur le couvercle (4), et qui permet à l'utilisateur d'appliquer une force d'ouverture et de fermeture sur le couvercle (4).

3. Ensemble d'accès au réglage des feu de brouillard (1) selon la revendication 1, **caractérisé par** un couvercle (4) qui est constitué d'une matière plastique flexible.

4. Ensemble d'accès au réglage des feu de brouillard (1) selon la revendication 1, **caractérisé par** le couvercle (4) qui est fabriqué d'une seule pièce avec le pare-chocs (T) après un procédé d'injection de matière plastique, et qui est sous la forme d'un prolongement s'étendant à partir du pare-chocs (T).

5. Ensemble d'accès au réglage des feu de brouillard (1) selon la revendication 3 ou 4, **caractérisé par** la languette (6) qui est fabriquée en une seule pièce avec le pare-chocs (T) après un procédé d'injection de matière plastique.
